Europäisches Patentamt

European Patent Office

Office européen des brevets

(11) Publication number: **0 404 711**
**A1**

# EUROPEAN PATENT APPLICATION

(21) Application number: **90500055.0**

(51) Int. Cl.5: **A01K 15/02**

(22) Date of filing: **18.06.90**

(30) Priority: **21.06.89 ES 8902152**

(43) Date of publication of application:
**27.12.90 Bulletin 90/52**

(84) Designated Contracting States:
**DE FR IT NL**

(71) Applicant: **Folgarolas Genero, Ramon**
**C. Jaume I, 5**
**E-08500 VIC (Barcelona)(ES)**

(72) Inventor: **Folgarolas Genero, Ramon**
**C. Jaume I, 5**
**E-08500 VIC (Barcelona)(ES)**

(74) Representative: **Ponti Sales, Adelaida**
**Paseo de Gracia, 33**
**E-08007 Barcelona(ES)**

(54) **Apparatus for training domestic animals.**

(57) It comprises a spindle (1) situated in the centre of a precinct (2), operated by an electric motor, to which are linked some arms (5) of adjustable position and length, from which hang electrified curtains (7) between which are formed zones to be occupied by one animal each, said animal being obliged to walk at the rate marked by the turning of the arms from which hang the curtains (7). In one embodiment the motor assembly is suspended from a gantry (9).

The horses can walk at will during the giratory movement of the apparatus, which can be programmed in cycles of several times, chosen in function of the result which it is desired to obtain.

FIG. 2

EP 0 404 711 A1

## APPARATUS FOR TRAINING DOMESTIC ANIMALS

The present invention refers to an apparatus for training domestic animals, especially horses, which permits the operation known as "giving rope" -at present carried out by the persons who tend these animals - to be carried out automatically and in a much more effective and controlled manner.

### BACKGROUND OF THE INVENTION

As was mentioned in the preceding paragraph, the task of giving rope to horses to keep them active and train them suitably is mostly carried out by the persons who tend the animals. This work is arduous, requiring many hours of the attention of a person who knows the animal and is able to combine periods of training making the animal walk or trot, according to its needs. In any case. giving rope involves keeping the animal tied by means of a rope of suitable length, which a wild horse does not always tolerate.

Also known in the art is a type of apparatus basically comprising one or more axial wheels fitted to a giratory spindle, to which the animals are tied, thus obliging them to walk at the pace imposed by the apparatus. This apparatus has the serious disadvantage of involving keeping the horses tied during the exercise and managing to make them go round at the same pace. This apparatus requires the constant vigilance of a person to ensure that the horses do not fall or hold up the exercise of the others, in short, making them keep in step.

### DESCRIPTION OF THE INVENTION

In order to provide a solution to the aforesaid disadvantages the apparatus object of the invention was designed, characterized in that it comprises a giratory spindle activated by an electric motor and suitable transmission, situated in the centre of an enclosed precinct, advantageously circular, to which spindle are linked a plurality of radial arms situated at a height slightly greater than that of the animals to be trained, with gap between arms and length of same adjustable at will, and further comprising curtains electrified at low voltage and intercepting the passage of the animals, so that between every pair of curtains there is sufficient space for occupation by one animal, which can walk at the pace marked by the spinning of the arms, without any need for said animal to be tied.

In a possible embodiment. the giratory spindle is coupled to a base situated on the floor of the precinct. in which is located the motor-reducer and suitable transmission gearing for operation of the spindle in question.

Also envisaged was the possibility of the motor-reducer being installed on the upper part of the giratory spindle. with suitable means of anchorage, so that the giratory spindle is in a raised position and the floor of the precinct is left free of obstacles.

According another option envisaged. the means of anchorage comprise a structure raised in the form of bridge, gantry or similar, in which the motor-reducer unit is suspended connected to the giratory spindle with the radial arms fitted with electrified curtains.

The apparatus further comprises means for prior programming of different training cycles or sessions, with possible changes of speed. which cycles may be selected at will, and means for counting of time. revolutions and/or kilometres covered by the animals.

### BRIEF DESCRIPTION OF THE DRAWINGS

For the better understanding of all that is described in the present specification a drawing is attached which, solely by way of example, shows a practical embodiment of the apparatus.

In said drawing,

figure 1 is an elevation view of the apparatus with the walls of the circular precinct appearing sectioned;

figure 2 is a plan view of the same apparatus; and

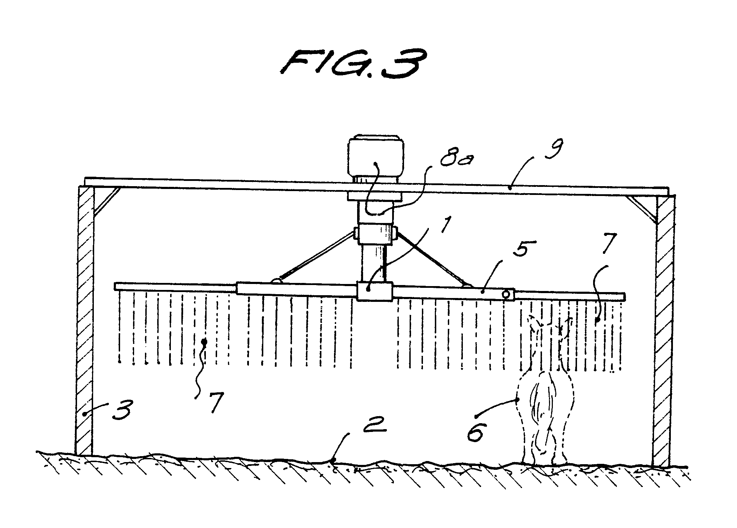

figure 3 is an elevation view of the apparatus, although in this case the giratory spindle is suspended from a structure of bridge or gantry type.

### DESCRIPTION OF PREFERRED EMBODIMENTS

The apparatus described comprises in the drawings a giratory spindle 1, situated in the centre of a circular precinct 2 enclosed by walls 3, with one or more access doors 4.

From the spindle 1 there depart radial arms 5 with adjustable gap between same. situated at a height greater than that of the animals 6 to be trained. These arms are telescopic so that their length may be adjusted in function of the diameter of the precinct 2.

From the arms 5 hang curtains 7 electrified at low voltage, which form barriers which prevent passage of the animals.

Between each pair of curtains 7 is enclosed a zone from which the animal cannot escape, due to its being prevented from doing so by the wall 3, on the one hand, and the electrified curtains 7 on the other. This zone is sufficiently spacious to allow the horse to move as it pleases.

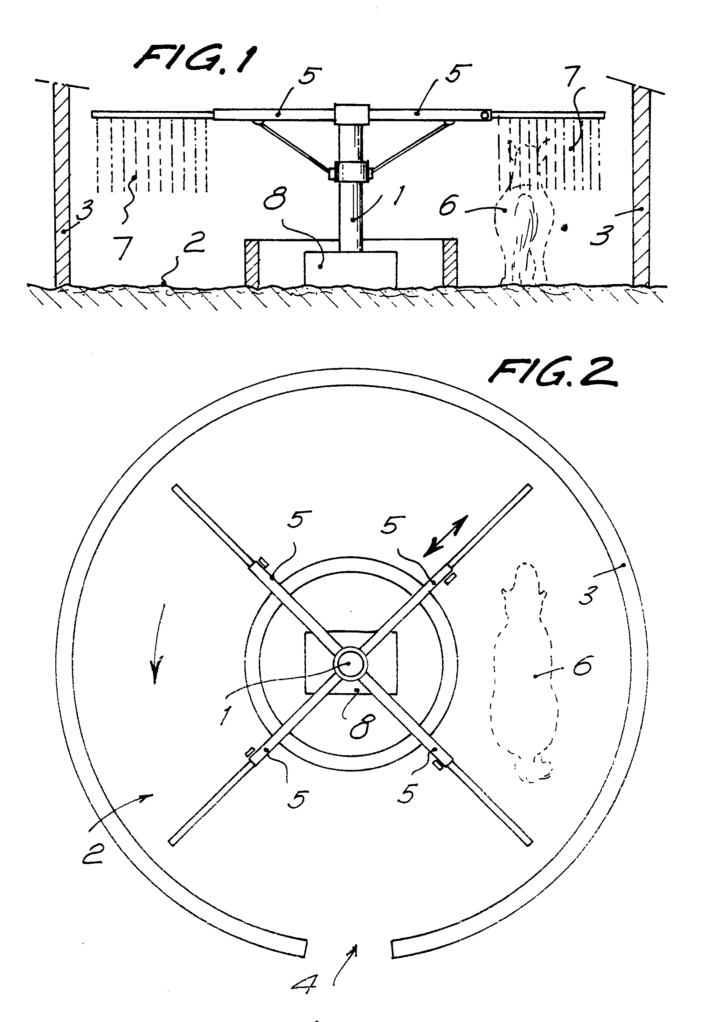

The spindle 1 is activated by a motor-reducer, which can be mounted on a base 8 situated in the centre of the floor of the precinct, from which there emerges the spindle in question (figure 1).

In another possible version, the assembly formed by the motor-reducer 8a, with the giratory spindle 1, the radial arms 5 and the curtains 7, is suspended from a gantry 9 situated above the precinct 2, in such a way that the electrified curtains 7 are in the same position as in the case illustrated in figure 1, though with the difference that the floor of the precinct is left free of obstacles.

The apparatus further includes suitable means which permit establishment of different work programmes or cycles, which the trainer may choose at will, and which may comprise various phases at different spin speeds. Each programme will obey the specific needs dictated by the ends to be achieved.

The trainer will choose a suitable programme and, having placed the horses in the zones formed by each pair of curtains 7, will set the apparatus into operation, at which point the apparatus will automatically carry out the programmed cycle without need for the animal tender to intervene.

The animal is obliged to walk/trot at the pace marked by the spinning of the spindle 1 and, therefore, of the curtains 7, but there is the advantage that it is not tied and can move with a certain amount of freedom.

Thanks to these characteristics the apparatus is suitable for training of animals for various disciplines, and even for the convalescence of damaged animals, which would otherwise be very difficult to rehabilitate.

## Claims

1. Apparatus for training domestic animals, characterized in that it comprises a giratory spindle (1) activated by an electric motor and suitable transmission, situated in the centre of an enclosed precinct (2), advantageously circular, to which spindle are linked a plurality of radial arms (5) situated at a height slightly greater than that of the animals (6) to be trained, with gap between arms (5) and length of same adjustable at will, and further comprising curtains (7) electrified at low voltage and intercepting the passage of the animals (6), so that between every pair of curtains (7) there is sufficient space for occupation by one animal (6), which can walk at the pace marked by the spinning of the arms (5), without any need for the animal to be tied.

2. Apparatus according to claim 1, characterized in that the giratory spindle (1) is coupled to a base (8) situated on the floor of the precinct (2), in which is located the motor-reducer and suitable transmission gearing for operation of the spindle (1) in question.

3. Apparatus according to claim 1, characterized in that the motor-reducer (8a) is installed on the upper part of the giratory spindle (1), with suitable means of anchorage, so that the giratory spindle (1) is in a raised position and the floor of the precinct (2) is left free of obstacles.

4. Apparatus according to claim 1, characterized in that the means of anchorage comprise a structure raised in the form of bridge (9), gantry or similar, in which the motor-reducer unit (8a) is suspended connected to the giratory spindle (1) with the radial arms (5) fitted with electrified curtains (7).

5. Apparatus according to claim 1, characterized in that it comprises means for prior programming of different training cycles or sessions, with possible changes of speed, which cycles may be selected at will, and means for counting of time, revolutions and/or kilometres covered by the animals.

FIG.1

FIG.2

# FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 411 560 (R. CARLMARK) * page 3, lines 22-34; page 5, lines 5-20; figure * | 1,2 | A 01 K 15/02 |
| A | | 5 | |
| Y | US-A-4 766 848 (L.M. ROCCO et al.) * column 2, lines 60-66; column 3, lines 3-6; figures 1,2 * | 1,2 | |
| A | | 5 | |
| Y | US-A-4 721 061 (MONTEINE MCNATT) * column 4, lines 51-63; abstract; figures 1,3,4,7,8 * | 1,2 | |
| A | FR-A-2 404 393 (J. KRONSEDER) * claims 1,4,8; figure 1 * | 3-5 | |

TECHNICAL FIELDS SEARCHED (Int. Cl.5)

A 01 K

The present search report has been drawn up for all claims

| Place of search | Date of completion of the search | Examiner |
|---|---|---|
| BERLIN | 24-08-1990 | MARTIN DEL RIO A |